# EUROPEAN PATENT APPLICATION

(11) **EP 4 567 984 A1**
(43) Date of publication of application: **11.06.2025**
(21) Application number: 23215192.8
(22) Date of filing: 08.12.2023
(51) Int. Cl.: H01M 50/209, H01M 50/276, H01M 50/30

(54) **WALL ASSEMBLY FOR A BATTERY PACK OF A VEHICLE, BATTERY PACK FOR A VEHICLE, AND VEHICLE**

(71) Applicant: Volvo Car Corporation, 405 31 Göteborg (SE)
(72) Inventor: WERBERG, Leopold, 40531 Göteborg (SE); MYSORE, Nandeep, 40531 Göteborg (SE); PERSSON, Klas, 40531 Göteborg (SE)
(74) Representative: Maiwald GmbH

(57) **Abstract**

The disclosure relates to a wall assembly (34) for a battery pack (12) of a vehicle. The wall assembly (34) comprises a carrier plate (14) and a protection sheet (16) connected to the carrier plate (14). Additionally, the protection sheet (16) and the carrier plate (14) are thermally coupled via a surface area of the carrier plate (14). Furthermore, the protection sheet (16) covers a portion of the carrier plate (14). Also, a battery pack (12) for a vehicle is presented. The battery pack (12) comprises an enclosure (36) including at least one wall assembly (34). Moreover, the battery pack (12) comprises a plurality of battery cells (18) arranged inside the enclosure (36). Moreover, each of the battery cells (18) includes a degassing valve. The degassing valves face the protection sheet (16) of the wall assembly (34). Furthermore, a vehicle having such a battery pack (12) is presented.

## Description

### TECHNICAL FIELD

The present disclosure relates to a wall assembly for a battery pack of a vehicle.

The present disclosure is also directed to a battery pack for a vehicle. The battery pack comprises an enclosure and a plurality of battery cells arranged inside the enclosure.

Moreover, the present disclosure is directed to a vehicle comprising a battery pack.

### BACKGROUND ART

Battery electric vehicles or hybrid electric vehicles may comprise a battery pack configured to provide electric energy for driving the vehicle. Such a battery pack may be called a traction battery pack.

In this context, an electric storage capacity of the battery pack is a major factor influencing a driving range of the associated vehicle. Thus, large driving ranges require large electric storage capacities which lead to a comparatively large geometric size of the battery pack. However, inside the vehicle space is limited such that the geometric size of the battery pack cannot be increased at will. Consequently, when desiring to increase the driving range and using a given space for the battery pack only, energy density of the battery pack needs to increase. At the same time operational safety of the battery pack needs to be ensured.

### SUMMARY

Therefore, it is an objective of the present disclosure to improve battery packs for vehicles such that they are well adapted to the above-mentioned challenges. This means that an improved battery pack shall be compact, be suitable for high energy densities and shall comply to high operational safety standards..

The problem is at least partially solved or alleviated by the subject matter of the independent claims of the present disclosure, wherein further examples are incorporated in the SE:TOP dependent claims.

According to a first aspect, there is provided a wall assembly for a battery pack of a vehicle. The wall assembly comprises a carrier plate and a protection sheet connected to the carrier plate. The protection sheet and the carrier plate are thermally coupled via a surface area of the carrier plate. Additionally, the protection sheet covers a portion of the carrier plate. In this context, a battery pack may be understood as a traction battery pack of a vehicle. An alternative term for the carrier plate is base plate. The fact that the protection sheet covers a portion of the carrier plate means that the protection sheet covers less than 100% of a surface of the carrier plate on which it is provided. The protection sheet serves as local protection for the carrier plate, e.g. against mechanical strain such as impacts of particles acting on the protection sheet. The fact that the protection sheet only covers a portion of the carrier plate serves the purpose of reducing the amount of additional material for the protection sheet that is needed in the battery pack. Thereby size and weight of the battery pack is reduced. The thermal coupling between the protection sheet and the carrier plate has the effect that heat energy may be diffused using the carrier plate. Thus, the protection sheet as such does not need to be configured to diffuse heat occurring during operation or malfunction of the battery pack. This also helps to reduce the amount of material needed for the protection sheet. The wall assembly according to the present disclosure for example provides a high level of safety in case of a thermal event happening in the battery pack. In such an event, hot gas comprising abrasive particles is ejected from one or more battery cells subject to the thermal event. In such a situation, the protection sheet serves as a ballistic shield against abrasive particles. At the same time, due to the thermal coupling between the protection sheet and the carrier plate, heat energy of the hot gas may be diffused in the carrier plate where it can be quickly and efficiently spread over a large surface area and mass.

According to an example, the protection sheet and the carrier plate may be mechanically connected. According to an example, the mechanical connection is achieved by roll bonding. In another example, the protection sheet may be cast into the carrier plate. According to a further example, the protection sheet and the carrier plate may be mechanically connected using threaded fasteners, rivets, and/or other suitable connection means. Additionally or alternatively, the protection sheet may be adhesively connected to the carrier plate, e.g., by an adhesive. In this context, a thermal interface material may be used in order to enhance thermal coupling between the protection sheet and the carrier plate. Further additionally or alternatively, the protection sheet may be held in place by other components of the battery pack. Such components may for example be bus bars or similar parts for electrically connecting battery cells of the battery pack to one another and/or for connecting the battery pack to a load or charging system.

According to an example, the protection sheet and the carrier plate are electrically insulated with respect to one another. Therefore, contact corrosion between the protection sheet and the carrier plate may be reduced and/or eliminated.

According to an example, an abrasion resistance of the protection sheet is higher than an abrasion resistance of the carrier plate. This further enhances the protective effect of the protection sheet against abrasive matter, e.g. particles released from a battery cell subject to a thermal event. This allows to choose a material for the carrier plate which has a comparatively low abrasion resistance but is highly performant in other aspects, e.g. light weight, high thermal conductivity Altogether, a comparatively long service life is ensured for the wall assembly. This may lead to a long service life of the associated battery pack.

According to an example, a density of the protection sheet is higher than a density of the carrier plate. Additionally or alternatively, a hardness of the protection sheet is higher than a hardness of the carrier plate. Further additionally or alternatively, a tensile strength of the protection sheet is higher than a tensile strength of the carrier plate. These characteristics have the effect that an abrasion resistance of the protection sheet is increased compared to an abrasion resistance of the carrier plate. Thus, the wall assembly may withstand mechanical impacts, e.g. abrasive particles. At the same time a material for the carrier plate which has a comparatively low abrasion resistance but is highly performant in other aspects may be chosen. Altogether, a robustness of the wall assembly with respect to undesired thermal and/or mechanical events is enhanced. This may lead to a comparatively long service life of the wall assembly. Consequently, a long service life of the associated battery pack may be realized.

According to an example, a thermal conductivity of the carrier plate is higher than a thermal conductivity of the protection sheet. This enables an efficient heat diffusion away from the protection sheet and away from battery cells of a battery pack using the wall assembly. In other words, the carrier plate may serve as a heat sink. Moreover, overheating of the protection sheet may be prevented.

According to an example, the carrier plate comprises a metal material. Additionally or alternatively, the protection sheet comprises a metal material. Metal material provides good mechanical stability and heat conduction properties. Moreover, a carrier plate and/or protection sheet made from metal material may be produced using well-established production technologies. Consequently, the production may be cost-efficient.

According to an example, the carrier plate comprises an aluminum material. Additionally or alternatively, the protection sheet comprises a steel material. Aluminum material is characterized by a low density, which may result in a low weight of the wall assembly. Additionally, aluminum material has advantageous heat conduction properties, i.e. aluminum material is a good conductor for heat. Thus, aluminum material is well-suitable to transfer and diffuse heat, thereby preventing overheating of the wall assembly and of a battery pack in which the wall assembly is used. Steel material is characterized by comparatively high density, tensile strength, and hardness, which may result in a robust wall assembly with high structural integrity. This has the effect that the protection sheet can withstand mechanical and/or chemical strain which may occur during malfunctioning of a battery cell, e.g. during a thermal event. Moreover, due to the comparatively high melting point of steel material, a protection sheet comprising steel material can withstand high thermal impacts. This way, the carrier plate is reliably shielded and protected from the mechanical, chemical and/or thermal strains.

According to an example, the wall assembly of the present disclosure comprises at least two protection sheets. Each protection sheet is connected to the carrier plate. Moreover, each of the protection sheets contacts a surface area of the carrier plate such that each of the protection sheets and the carrier plate are thermally coupled via the associated surface area. Additionally each of the protection sheets covers a portion of the carrier plate. Thus, the at least two protection sheets are arranged on the carrier plate at different locations. These locations may coincide with locations subject to high mechanical strain or risking high mechanical impacts, e.g. from particles. In simplified words, by providing the at least two protection sheets, the carrier plate is protected where needed. The locations to be protected result for example from an arrangement of battery cells of the battery pack in which the wall assembly is used. In an example, each protection sheet may shield the carrier plate from a potential ejection of hot matter form one or a group of battery cells. Since each of the protection sheets covers a portion of the surface area of the carrier plate, comparatively little material for the protection sheets may be used. Therefore, a low weight and a compact size of the wall assembly may be achieved.

According to another example, the wall assembly of the present disclosure alternatively comprises more than two protection sheets. As has been mentioned before, the number of protection sheets may correspond to a number of locations on the carrier plate that need to be protected.

According to an example, the protection sheets are arranged in a regular pattern. Protection sheets arranged in a regular pattern are for example arranged such that neighboring protection sheets have a constant center distance. In another example, a distance between neighboring protection sheets is constant. Additionally or alternatively, protection sheets may be arranged in parallel or at any other predefined angle. The regular pattern of the protection sheets may correspond to a regular pattern of elements of battery cells of a battery pack using the wall assembly. In this case, the battery cells may be arranged in two or more rows and each of the at least two protection sheets may be associated with one row of battery cells. In this context, degassing valves of the battery cells may be arranged in two or more rows and each of the at least two protection sheets may be arranged opposite to one row of degassing valves. This has the effect that the carrier plate is reliably shielded from ejected matter from each of the rows of battery cells, more precisely from the degassing valves. Arranging the protection sheets in a regular pattern may also result in an easier and more efficient assembling procedure of the wall assembly.

According to an example, a thickness of the carrier plate exceeds a thickness of the protection sheet. The thickness of the protection sheet is preferably 5 % to 10 % of the thickness of the carrier plate. This has the effect that heat energy only has to travel a comparatively small distance, namely the thickness of the protection sheet, in order to reach the carrier plate. This facilitates heat diffusion. Furthermore, also a comparatively high thickness of the carrier plate facilitates the heat conduction. This may prevent possible overheating of the wall assembly and e.g. of the battery pack. Further, a comparatively low thickness of the protection sheet has the effect that a comparatively small amount of material for the protection sheet is needed. This reduces size and weight of the wall assembly. Moreover, material costs for the protection sheet are comparatively small.

According to a second aspect, there is provided a battery pack for a vehicle. The battery pack comprises an enclosure. The enclosure comprises at least one wall assembly according to the present disclosure. The battery pack also comprises a plurality of battery cells arranged inside the enclosure. Each of the battery cells comprises a degassing valve. Additionally, the degassing valves face the protection sheet of the wall assembly. In this context, the wall assembly may form part of the enclosure of the battery pack. According to an example, the battery cells are stacked along a stacking direction. Thereby, one or more "piles" or stacks of battery cells are formed. Degassing valves are valves that are configured to release gases and/or particles from a battery cell in case of a thermal event. According to an example, the degassing valves are all oriented into the same direction. Therefore, the degassing valves enable a gas release into targeted directions inside the enclosure of the battery pack. When a battery cell is subject to a thermal event, it may eject hot gases and/or particles through its degassing valve. The fact that the degassing valves face the protection sheet results in the effect that hot matter is sprayed against the protection sheet in case of a thermal event. Thereby, the carrier plate is shielded from the hot matter. Hence, the enclosure of the battery pack may be shielded from the hot and/or abrasive matter. The enclosure may be used as a structural component supporting the battery cells. Such an enclosure offers good heat conduction properties and high resilience against abrasive matter and/or resilience against mechanical loads. This enhances the robustness of the battery pack against thermal and/or mechanical events and, thus, the service life of the battery pack. Moreover, due to the above-mentioned compactness of the wall assembly, also the battery pack may be compact hand have a comparatively low weight. The compactness of the wall assembly also enables high electric capacities of the battery pack since space not needed for the wall assembly may be used for additional battery cells. Moreover, the wall assembly offers the possibility to use cell chemistries which lead to high electric storage capacities while occupying comparatively little space. This is due to the fact that the wall assembly according to the present disclosure ensures compliance with high safety standards.

According to an example, the protection sheet delimits a gas channel. Such a gas channel may guide gases and/or particles released from the battery cell towards a discharge port of the battery pack. This may be the case following a thermal event. Further, since gases and/or particles released from the battery cell are guided to the discharge port of the battery pack, occurring pressure in the battery cell originating from the particles and gases is reduced, and undue impact of the abrasive particles on the enclosure of the battery pack can be avoided. Thus, the safety and stability of the battery cell and therefore of the battery pack may be enhanced.

According to an example, the wall assembly forms a bottom wall or a top wall of the battery pack. In general, there are different ways of positioning battery cells inside a battery pack of a vehicle. Battery cells may be position bottom-up or bottom-down into a battery pack of a vehicle, wherein the bottom of the battery cell is to be understood as the side opposite to the side of the battery cell on which the electric connection terminals are provided. In either case, abrasive matter being ejected through the degassing valve is sprayed onto the protection sheet. Thus, a reliable shielding of the enclosure of the battery pack is maintained. Further, an assembling procedure of the battery pack is facilitated and costs may therefore be reduced.

It should be understood that, in an example, the battery cells can also partly or entirely be inserted into the enclosure of the battery pack with their degassing valves facing towards a side wall of the enclosure of the battery pack. In this case, the protection sheet and therewith the wall assembly may form a side wall of the battery pack. This has the effect that also in this case, abrasive matter being ejected through the degassing valve is sprayed onto the protection sheet. Thus, a reliable shielding of the enclosure of the battery pack is maintained.

According to an example, at least a portion of the battery cells are mechanically coupled to the wall assembly. The term "mechanically coupled" means that at least a portion of the battery cells are connected to the wall assembly such that forces and/or torques may be transferred between the respective battery cells and the wall assembly. This way, a movement of the battery cells with their degassing valves relative to the wall assembly may be hindered or blocked. Hence, the degassing valves remain aligned with respect to the protection sheet. In other words, the degassing valves remain faced towards the protection sheet of the wall assembly. It is desirable to keep the degassing valves of the battery cells aligned to the protection sheets because the protection sheets only cover a portion of the enclosure of the battery pack. This way, it is made sure that abrasive matter being ejected through a degassing valve is always sprayed onto the protection sheet. Thus, a reliable shielding of the carrier plate and/or the enclosure of the battery pack is maintained. Moreover, if at least a portion of the battery cells are mechanically coupled to the wall assembly the battery cells may used to provide mechanical stability to the enclosure. In this context, the battery cells may be used to carry shear loads. In other words, by mechanically coupling the battery cells to the wall assembly, a "shear plane" may be formed wherein the battery cells are used to absorb or carry shear loads. Thus, the structural integrity of the battery pack and its resilience against mechanical loads may be enhanced. Since the battery cells are used to carry mechanical loads, a size and/or weight of the enclosure may be reduced. Consequently, a size and/or weight of the battery pack is comparatively small.

According to an example, the wall assembly is a structural component of the vehicle. This means that either a portion of the enclosure of the battery pack that comprises the wall assembly or the entire enclosure of the battery pack is a structural component of the vehicle. In other words, the battery pack of the vehicle is a structural battery pack. In this case, the enclosure of the battery pack of the vehicle contributes to the structural functionalities of a chassis of the vehicle. In other words, the wall assembly is configured to carry loads that usually are to be carried by the chassis of the vehicle. This may be the case in any driving situations including the event of a crash. Due to the ability of the enclosure of the battery pack to contribute to the structural functionality of the chassis of the vehicle, the chassis itself can be built in a weight-saving and efficient manner. In other words, redundant structural components in the vehicle can be avoided. In case the wall assembly is a structural component of the vehicle, it is particularly important that the protection sheet shields the carrier plate from abrasive impact of any matter ejected from the battery cells when any of them is subject to a thermal event. This is because abrasive impact on the carrier plate may deteriorate the structural properties of the carrier plate and therewith the enclosure of the battery pack. Further, the wall assembly supports the battery pack while, at the same time, offering improved heat conduction and/or resilience against abrasive materials originating from the battery cells. Altogether, the wall assembly enables a total weight reduction of the vehicle, and the wall assembly has the effect that the safety of the vehicle is enhanced.

According to a third aspect, there is provided a vehicle, wherein the vehicle comprises a battery pack according to the present disclosure. Due to the fact that the battery pack is compact, light-weight and may be operated in compliance with high safety standards, the battery pack consumes comparatively little space in the vehicle and contributes comparatively little weight to the total weight of the vehicle. Moreover, the vehicle as a whole may be operated in compliance with high safety standards. This offers the possibility to use battery packs of high energetic density, i.e. having a high electric storage capacity while still being comparatively compact, in the vehicle. This ensures a large traveling range of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a battery pack according to the present disclosure having a wall assembly according to the present disclosure,
- Figure 2: shows the wall assembly of Figure 1 and a plurality of battery cells of the battery pack of the vehicle of Figure 1 in an separate, perspective view, wherein the wall assembly is partly represented in a transparent manner,
- Figure 3: shows a sectional along plane III of the battery pack of Figure 3,
- Figure 4: shows the wall assembly of the battery pack of Figure 2 in a separate view.

### DETAILED DESCRIPTION

The Figures are merely schematic representations and serve only to illustrate examples of the disclosure. Identical or equivalent elements are in principle provided with the same reference signs.

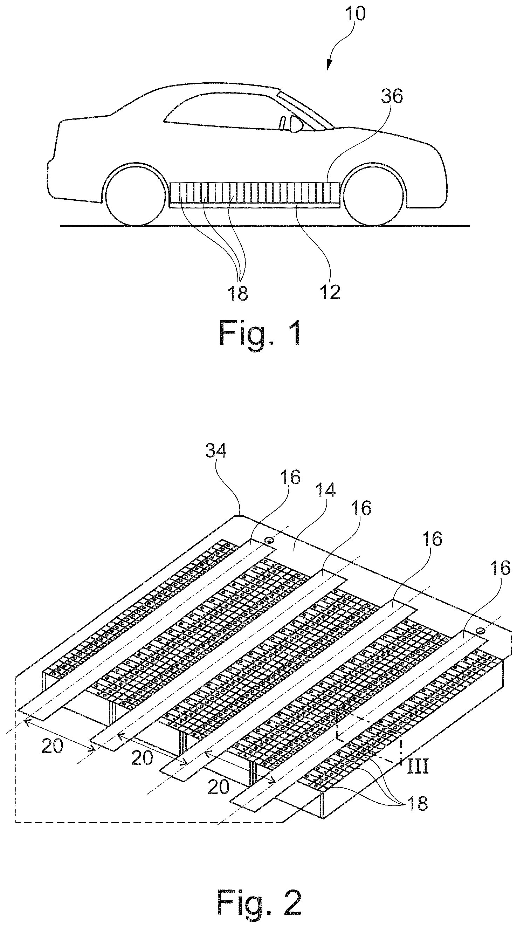

Figure 1 shows an electric vehicle 10 which will simply be called a vehicle 10 in the following.

The vehicle 10 comprises a battery pack 12 comprising a plurality of battery cells 18 arranged in an enclosure 36. For reasons of better visibility, only some of the battery cells 18 are equipped with a reference sign.

In the present example, the battery pack 12 is a traction battery, i.e. the battery pack 12 is used for driving the vehicle 10.

Moreover, in the present example, the battery pack 12 is a so-called structural battery. This means that at least some of the components of the battery pack 12 serve as structural components forming part of a chassis of the vehicle 10. Thus a mechanical stiffness of the chassis is partly provided by the battery pack 12. In other words, forces and torques acting on the chassis, e.g. during driving, may at least party be carried by components of the battery pack 12. This enables a light-weight construction of the vehicle chassis.

Figure 2 shows a wall assembly 34 and a plurality of battery cells 18 of the battery pack 12 in more detail.

In the present context, the wall assembly 34 forms a top wall of the enclosure 36 of the battery pack 12. Side walls and a bottom wall of the enclosure 36 are not shown in Figure 2.

The wall assembly 34 comprises a carrier plate 14 and a total of four protection sheets 16. For reasons of better visibility, the carrier plate 14 is represented in a transparent manner.

In the present example, the battery cells 18 of the battery pack 12 are arranged in four parallel rows of stacked battery cells 18. Moreover, the battery cells 18 of neighboring rows abut against one another in a direction perpendicular to a stacking direction of the rows. For reasons of better visibility, the rows are not completely filled with battery cells 18.

As far as the wall assembly 34 is concerned, the protection sheet 16 is connected to the carrier plate 14, e.g. by use of an adhesive. Moreover, the protection sheet 16 and the carrier plate 14 are thermally coupled via a surface area of the carrier plate 14. This means that heat may be transferred between the protection sheet 16 and the carrier plate 14, wherein a comparatively low resistance acts against this heat transfer.

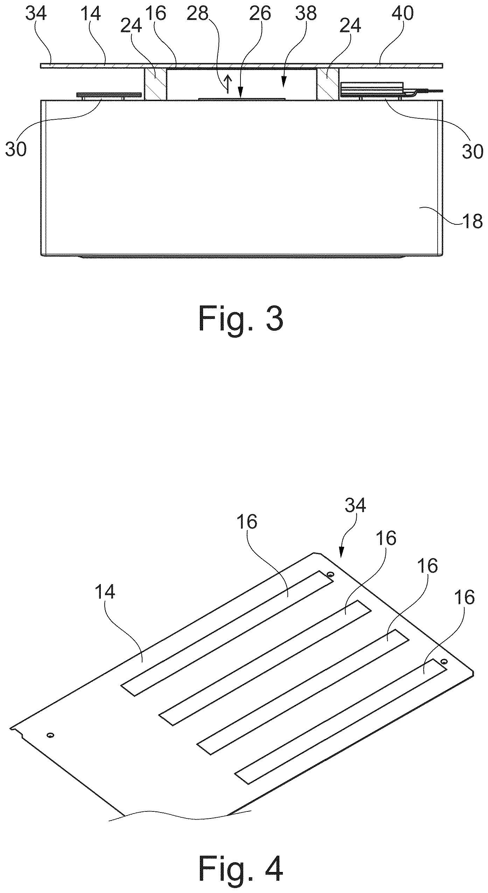

Further, each of the protection sheets 16 covers only a portion of the carrier plate 14 (see also Figure 4).

The four protection sheets 16 are arranged in a regular pattern. In the present example, this means that the four protection sheets 16 extend in parallel. Moreover, the protection sheets 16 are arranged such that a center distance 20 between neighboring protection sheets 16 is constant.

Additionally, each of the protection sheets 16 is aligned with one of the four rows of the stacked battery cells 18. More precisely, each protection sheet is centered with respect to the associated row of battery cells along a direction perpendicular to the stacking direction. Since the geometry of each battery cell 18 is the same, and a degassing valve 26 is provided centrally on each of the battery cells 18, the degassing valves 26 of each row of battery cells 18 are arranged opposite the associated protection sheet 16 (see also Figure 3).

The degassing valves 26 are arranged on the same side as electric connection terminals 30 of the battery cells 18.

Figure 3 shows more details of one of the battery cells 18 and the wall assembly 34.

The wall assembly 34 and the battery cell 18 are mechanically coupled using connection elements 24. The connection elements are arranged in between the battery cell 18 and the wall assembly 34.

Besides the mechanical coupling, the connection elements 24 define a clearance between the battery cell 18 and the wall assembly 34 such that the degassing valve 26 is spaced from the wall assembly 34.

Consequently, a gas channel 38 is formed which is delimited by the side of the battery cell 18 comprising the degassing valve 26, the connection elements 24 and the wall assembly 34, more precisely the protection sheet 16.

In a case in which the battery cell 18 of Figure 3 suffers from a thermal event, such as a thermal runaway, heat, gases and/or particles may be released from the battery cell 18 via the degassing valve 26. The heat, gases and/or particles may simply be called hot and/or abrasive matter 28 which is represented by an arrow in Figure 3.

The hot and/or abrasive matter 28 is sprayed against the protection sheet 16. The protection sheet 16 prevents the hot and abrasive matter 28 from contacting the carrier plate 14 and, thus, prevents mechanical damage of the carrier plate 14.

The hot and/or abrasive matter 28 may be guided away from the battery cell 18 through the gas channel 38. At the same time, heat may be absorbed by the carrier plate 14 through the protection sheet 16. Since the carrier plate 14 is made from aluminum and has a certain thickness, the heat may be dissipated in the carrier plate 14, thereby protecting neighboring battery cells 18 and/or electric connection means 32 of the battery pack, such as bus bars, from excessive heat exposure.

The mechanical coupling between battery cells 18 and the wall assembly 34 further facilitates maintaining the defined orientation and positioning of the degassing valves 26 of the battery cells 18 relative to the protection sheet 16 of the wall assembly 34.

It is further noted that in the present example, the protection sheet 16 is made from a steel material and the carrier plate 14 is made from an aluminum material.

Consequently, an abrasion resistance of the protection sheet 16 is higher than an abrasion resistance of the carrier plate 14. Thereby, the carrier plate 14 is shielded and protected from the hot and abrasive matter 28 using the protection sheet 16.

In more detail, the higher abrasion resistance of the protection sheet 16 is due to the fact that the steel material has a higher density, a higher hardness and a higher tensile strength than the aluminum material of the carrier plate 14.

Moreover, a thermal conductivity of the carrier plate 14 is particularly high, i.e. higher than a thermal conductivity of the protection sheet 16. This allows for a quick spreading of the heat from the hot and abrasive matter 28 through the carrier plate. In other words, the carrier plate 14 serves as a heat sink.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery pack
- 14: carrier plate
- 16: protection sheet
- 18: battery cell
- 20: center distance
- 22: bottom wall
- 24: connection element
- 26: degassing valve
- 28: hot and/or abrasive matter
- 30: electric connection terminal
- 32: electric connection means
- 34: wall assembly
- 36: enclosure
- 38: gas channel
- 40: top wall

## Claims

1. A wall assembly (34) for a battery pack (12) of a vehicle (10), the wall assembly (34) comprising a carrier plate (14) and a protection sheet (16) connected to the carrier plate (14), wherein the protection sheet (16) and the carrier plate (14) are thermally coupled via a surface area of the carrier plate (14) and wherein the protection sheet (16) covers a portion of the carrier plate (14).

2. The wall assembly (34) of claim 1, wherein an abrasion resistance of the protection sheet (16) is higher than an abrasion resistance of the carrier plate (14).

3. The wall assembly of claim 2, wherein a density of the protection sheet (16) is higher than a density of the carrier plate (14) and/or wherein a hardness of the protection sheet (16) is higher than a hardness of the carrier plate (14) and/or wherein a tensile strength of the protection sheet (16) is higher than a tensile strength of the carrier plate (14).

4. The wall assembly (34) of any one of the preceding claims, wherein a thermal conductivity of the carrier plate (14) is higher than a thermal conductivity of the protection sheet (16).

5. The wall assembly (34) of any one of the preceding claims, wherein the carrier plate (14) comprises a metal material and/or wherein the protection sheet (16) comprises a metal material.

6. The wall assembly (34) of claim 5, wherein the carrier plate (14) comprises an aluminum material and/or wherein the protection sheet (16) comprises a steel material.

7. The wall assembly (34) of any one of the preceding claims, comprising at least two protection sheets (16), each protection sheet (16) connected to the carrier plate (14), wherein each of the protection sheets (16) contacts a surface area of the carrier plate (14) such that each of the protection sheets (16) and the carrier plate (14) are thermally coupled via the associated surface area and wherein each of the protection sheets (16) covers a portion of the carrier plate (14).

8. The wall assembly (34) of claim 7, wherein the protection sheets (16) are arranged in a regular pattern.

9. The wall assembly (34) of any one of the preceding claims, wherein a thickness of the carrier plate (14) exceeds a thickness of the protection sheet (16).

10. A battery pack (12) for a vehicle (10), comprising
an enclosure (36), wherein the enclosure (36) comprises at least one wall assembly (34) according to any one of the preceding claims, and
a plurality of battery cells (18) arranged inside the enclosure (36), wherein each of the battery cells (18) comprises a degassing valve (26),
wherein the degassing valves (26) face the protection sheet (16) of the wall assembly (34).

11. The battery pack (12) of claim 10, wherein the protection sheet (16) delimits a gas channel (38).

12. The battery pack (12) of claim 10 or 11, wherein the wall assembly (34) forms a bottom wall (22) or a top wall (40) of the battery pack (12).

13. The battery pack (12) of any one of claims 10 to 12, wherein at least a portion of the battery cells (18) are mechanically coupled to the wall assembly (34).

14. The battery pack (12) of any one of claims 10 to 13, wherein the wall assembly (34) is a structural component of the vehicle (10).

15. A vehicle (10) comprising a battery pack (12) of any one of claims 10 to 14.
